# EUROPÄISCHE PATENTANMELDUNG

(11) **EP 2 420 797 A2**
(43) Veröffentlichungstag der Anmeldung: **22.02.2012**
(21) Anmeldenummer: 11006578.6
(22) Anmeldetag: 10.08.2011
(51) Int. Cl.: G01B 11/24, G06T 7/00

(54) **Verfahren zur 3D-Digitalisierung eines Objekts mit veränderlicher Oberfläche**

(30) Priorität: 20.08.2010 DE 102010034987
(71) Anmelder: Steinbichler Optotechnik GmbH, 83115 Neubeuern (DE)
(72) Erfinder: Prams, Matthias, 83101 Rohrdorf (DE); Mayer, Thomas, 83059 Kolbermoor (DE)
(74) Vertreter: Zinnecker, Armin

(57) **Zusammenfassung**

Bei einem Verfahren zur 3D-Digitalisierung eines Objekts mit veränderlicher Oberfläche werden zur Ermittlung der 3D-Koordinaten der Oberfläche des Objekts (4) mehrere Kamerabilder von Teiloberflächen des Objekts (4) aufgenommen und zusammengesetzt. Es werden Kamerabilder von Teiloberflächen des Objekts (4) aufgenommen, die sich an ihren Rändern überlappen. Für jedes Kamerabild werden die 3D-Koordinaten der zugehörigen Teiloberfläche des Objekts (4) bestimmt. Die 3D-Koordinaten dieser Teiloberflächen des Objekts (4) werden durch ein Matching-Verfahren angeglichen und zusammengesetzt. Jedes Kamerabild wird in Teilbilder (1.1-1.9, 2.1-2.9, 3.1-3.9) unterteilt, die sich an ihren Rändern überlappen und die sich mit den Teilbildern benachbarter Kamerabilder überlappen. Den Teilbildern (1.1-3.9) werden die zugehörigen 3D-Koordinaten aus den Kamerabildern zugeordnet. Die 3D-Koordinaten der Teilbilder (1.1.-3.9) werden durch ein Matching-Verfahren angeglichen und zusammengesetzt. Das Verfahren kann mehrmals iterativ durchgeführt werden (Fig. 2).

## Beschreibung

Die Erfindung betrifft ein Verfahren zur 3D-Digitalisierung eines Objekts mit veränderlicher Oberfläche, bei dem zur Ermittlung der 3D-Koordinaten der Oberfläche des Objekts mehrere Kamerabilder von Teiloberflächen des Objekts aufgenommen und zusammengesetzt werden.

Ein Verfahren zur 3D-Digitalisierung eines Objekts mit einer nicht veränderlichen Oberfläche nach dem Oberbegriff des Anspruchs 1 ist aus der EP 2 144 036 A2 bekannt. Bei diesem Verfahren wird ein Objekt mit nicht veränderlicher Oberfläche mit Weißlicht-Streifen bestrahlt. Von einer Kamera werden Bilder von Teiloberflächen des Objekts aufgenommen. Die Kamera kann eine Optik und einen flächenhaften Sensor umfassen, beispielsweise einen CCD-Sensor oder einen CMOS-Sensor. Aus den Kamerabildern werden die 3D-Koordinaten der Teiloberflächen des Objekts bestimmt. Die 3D-Koordinaten der Teiloberflächen werden durch ein Matching-Verfahren zusammengesetzt.

Bei der EP 2 144 036 werden von dem Objekt verschiedene Aufnahmen gemacht, aus denen 2D-Feature-Punkte des Objekts bestimmt werden. Anschließend werden die 3D-Koordinaten der 2D-Feature-Punkte bestimmt. Zwischen den 2D-Feature-Punkten einer Aufnahme und den 2D-Feature-Punkten einer anderen Aufnahme werden die 2D-Punktkorrespondenzen bestimmt. Mehrere dieser 2D-Punktkorrespondenzen werden ausgewählt, und es wird eine zugehörige 3D-Transformation bestimmt. Anhand der transformierten 3D-Koordinaten der 2D-Feature-Punkte wird die Qualität dieser 3D-Transformation bestimmt, und daraus werden gültige 3D-Feature-Punkte ermittelt. Für die Zusammensetzung der Kamerabilder des Objekts werden die 3D-Koordinaten der gültigen 3D-Feature-Punkte verwendet.

Es sind allerdings auch andere Matching-Verfahren bekannt, mit denen die vorliegende Erfindung durchgeführt werden kann, beispielsweise die Methode der minimalen Fehlerquadrate oder andere Matching-Verfahren.

Bei Objekten mit veränderlicher Oberfläche, beispielsweise bei Lebewesen, insbesondere Menschen, ergibt sich allerdings das Problem, daß die Kamerabilder der Teiloberflächen in einem zeitlichen Abstand voneinander aufgenommen werden, so daß sich die Oberflächen und Teiloberflächen zwischen den Aufnahmen verändern können.

Aufgabe der Erfindung ist es, ein Verfahren der eingangs angegebenen Art vorzuschlagen, das auch zur 3D-Digitalisierung eines Objekts mit veränderlicher Oberfläche geeignet ist.

Erfindungsgemäß wird diese Aufgabe durch die Merkmale des Anspruchs 1 gelöst. Nach dem Verfahren werden Kamerabilder von Teiloberflächen des Objekts, die sich an ihren Rändern überlappen, aufgenommen. Für jedes Kamerabild werden die 3D-Koordinaten der zugehörigen Teiloberfläche des Objekts bestimmt. Dies kann nach dem Verfahren der Weißlicht-Projektion geschehen. Es kann allerdings auch nach einem anderen Verfahren durchgeführt werden. Die 3D-Koordinaten der Teiloberflächen des Objekts werden durch ein Matching-Verfahren angeglichen und zusammengesetzt. Dabei kann das Matching-Verfahren nach der EP 2 144 036 A2 oder ein anderes Matching-Verfahren angewendet werden. Durch das Matching können aufgrund von Veränderungen der Oberfläche zwischen den Aufnahmen verschiedener Kamerabilder sogenannte Artefakte entstehen, die als Stufen in der zusammengesetzten Oberfläche des Objekts sichtbar sein können.

Gemäß der Erfindung wird jedes Kamerabild in Teilbilder unterteilt, die sich an ihren Rändern überlappen und die sich mit den Teilbildern benachbarter Kamerabilder überlappen. Den Teilbildern werden die zugehörigen 3D-Koordinaten aus den Kamerabildern zugeordnet. Dabei handelt es sich insbesondere um die 3D-Koordinaten, die durch das Matching-Verfahren aus den 3D-Koordinaten der Teiloberflächen des Objekts ermittelt wurden. Anschließend werden die 3D-Koordinaten der Teilbilder durch ein Matching-Verfahren angeglichen und zusammengesetzt. Dabei kann das Matching-Verfahren nach der EP 2 144 036 A2 oder ein anderes Matching-Verfahren angewendet werden. In das Matching-Verfahren können alle Teilbilder von allen Kamerabildern einbezogen werden. Durch das Matching der Teilbilder können die Artefakte eliminiert werden. In den zusammengesetzten 3D-Koordinaten der gesamten Oberfläche sind keine Stufen mehr sichtbar.

Vorteilhaft ist es, wenn das Verfahren mehrmals, vorzugsweise iterativ durchgeführt wird. Es kann so lange iterativ durchgeführt werden, bis ein befriedigendes Ergebnis erreicht worden ist.

Ein Ausführungsbeispiel der Erfindung wird nachstehend anhand der beigefügten Zeichnung im einzelnen erläutert. In der Zeichnung zeigt
- Fig. 1: ein Objekt mit veränderlicher Oberfläche, nämlich den Oberkörper eines Menschen, in einer Ansicht von vorne, wobei die Oberfläche in drei Teiloberflächen unterteilt ist,
- Fig. 2: das Objekt gemäß Fig. 1, wobei die Kamerabilder in Teilbilder unterteilt sind.

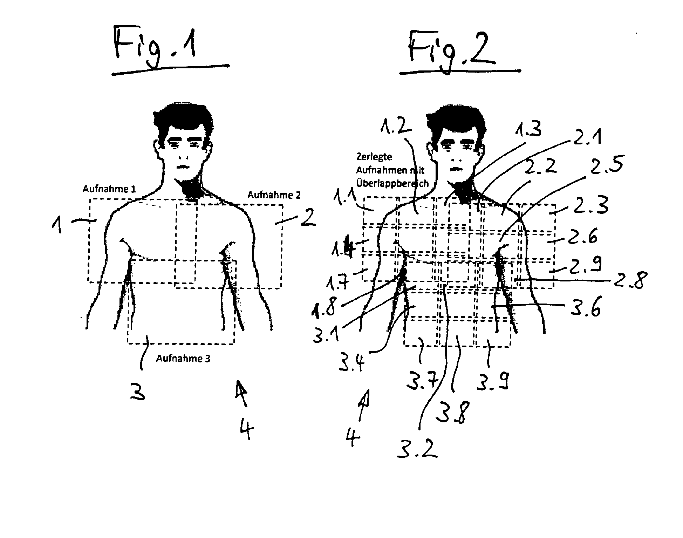

Das in Fig. 1 gezeigte Objekt 4 umfaßt drei Teiloberflächen 1, 2, 3, die sich an ihren Rändern überlappen. Von jeder Teiloberfläche 1, 2, 3 wird nacheinander ein Kamerabild aufgenommen. Dies kann durch einen Sensor (in der Zeichnung nicht dargestellt) erfolgen, der eine Kamera und einen Weißlicht-Streifenprojektor umfaßt. Bei jeder Aufnahme wird die zugehörige Teiloberfläche 1, 2, 3 mit Weißlicht-Streifen bestrahlt. Für jedes Kamerabild werden die 3D-Koordinaten der zugehörigen Teiloberfläche 1, 2, 3 des Objekts 4 bestimmt.

Anschließend werden die 3D-Koordinaten dieser Teiloberflächen 1, 2, 3 des Objekts 4 durch ein Matching-Verfahren angeglichen und zusammengesetzt, beispielsweise durch das Matching-Verfahren nach der EP 2 144 036 A2.

Wie in Fig. 2 dargestellt wird jedes Kamerabild, das zu einer Teiloberfläche 1, 2, 3 gehört, in Teilbilder 1.1-1.9, 2.1-2.9 und 3.1-3.9 unterteilt. Die Teilbilder 1.1-1.9 sind in drei Zeilen und drei Spalten angeordnet. Sie überlappen sich an ihren Rändern. Auch die Teilbilder 2.1-2.9 und 3.1-3.9 sind jeweils in drei Zeilen und drei Spalten angeordnet und überlappen sich jeweils an ihren Rändern. Ferner überlappen sich die Teilbilder benachbarter Kamerabilder. Beispielsweise überlappen sich die Teilbilder 1.3, 1.6 und 1.9 mit den Teilbildern 2.1, 2.4 und 2.7. Die Teilbilder 1.8 und 1.9 überlappen sich mit den Teilbildern 3.1 und 3.2. Die Teilbilder 2.7 und 2.8 überlappen sich mit den Teilbildern 3.2 und 3.3.

Den Teilbildern 1.1-1.9, 2.1-2.9, 3.1-3.9 werden die zugehörigen 3D-Koordinaten aus den Kamerabildern der Teiloberflächen 1, 2, 3 zugeordnet. Den Teilbildern 1.1 bis 3.9 werden die "gematchten" 3D-Koordinaten aus den Kamerabildern der Teiloberflächen 1, 2, 3 zugeordnet, also die 3D-Koordinaten dieser Teiloberflächen 1, 2, 3, die durch das obengenannte Matching-Verfahren angeglichen und zusammengesetzt worden sind. Anschließend werden diese 3D-Koordinaten der Teilbilder 1.1-1.9, 2.1-2.9, 3.1-3.9 durch ein Matching-Verfahren ausgeglichen und zusammengesetzt. Auch hier kann wieder das Matching-Verfahren nach der EP 2 144 036 A2 angewendet werden oder ein anderes Matching-Verfahren. In das Matching-Verfahren werden alle Teilbilder 1.1-3.9 einbezogen.

Das erfindungsgemäße Verfahren, insbesondere das Matching-Verfahren über alle Teilbilder 1.1-3.9, kann mehrmals durchgeführt werden. Vorzugsweise wird dieses Verfahren mehrmals iterativ durchgeführt, bis befriedigende Ergebnisse erzielt worden sind.

## Patentansprüche

1. Verfahren zur 3D-Digitalisierung eines Objekts mit veränderlicher Oberfläche, bei dem zur Ermittlung der 3D-Koordinaten der Oberfläche des Objekts (4) mehrere Kamerabilder von Teiloberflächen (1, 2, 3) des Objekts (4) aufgenommen und zusammengesetzt werden,
**dadurch gekennzeichnet,**
**daß** Kamerabilder von Teiloberflächen (1, 2, 3) des Objekts (4), die sich an ihren Rändern überlappen, aufgenommen werden,
**daß** für jedes Kamerabild die 3D-Koordinaten der zugehörigen Teiloberfläche (1, 2, 3) des Objekts (4) bestimmt werden,
**daß** die 3D-Koordinaten dieser Teiloberflächen (1, 2, 3) des Objekts (4) durch ein Matching-Verfahren angeglichen und zusammengesetzt werden,
**daß** jedes Kamerabild in Teilbilder (1.1-1.9, 2.1-2.9, 3.1-3.9), die sich an ihren Rändern überlappen und die sich mit den Teilbildern benachbarter Kamerabilder überlappen, unterteilt wird,
**daß** den Teilbildern (1.1-3.9) die zugehörigen 3D-Koordinaten aus den Kamerabildern zugeordnet werden
und **daß** die 3D-Koordinaten der Teilbilder (1.1-3.9) durch ein Matching-Verfahren ausgeglichen und zusammengesetzt werden.

2. Verfahren nach Anspruch 1, **dadurch gekennzeichnet, daß** das Verfahren mehrmals iterativ durchgeführt wird.
